(19) Europäisches Patentamt
European Patent Office
Office européen des brevets

(11) EP 3 860 208 A1

(12) EUROPEAN PATENT APPLICATION
published in accordance with Art. 153(4) EPC

(43) Date of publication:
04.08.2021 Bulletin 2021/31

(51) Int Cl.:
*H04W 28/06* (2009.01)

(21) Application number: 18935192.7

(86) International application number:
PCT/JP2018/036480

(22) Date of filing: 28.09.2018

(87) International publication number:
WO 2020/065977 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Chiyoda-ku
Tokyo 100-6150 (JP)

(72) Inventors:
• TAKEDA, Kazuki
Tokyo 100-6150 (JP)
• NAGATA, Satoshi
Tokyo 100-6150 (JP)
• WANG, Lihui
Beijing 100190 (CN)
• HOU, Xiaolin
Beijing 100190 (CN)

(74) Representative: Hoffmann Eitle
Patent- und Rechtsanwälte PartmbB
Arabellastraße 30
81925 München (DE)

(54) **USER EQUIPMENT AND RADIO COMMUNICATION METHOD**

(57) A user terminal according to one aspect of the present disclosure includes a reception section that receives first downlink control information (DCI) for a first communication service, and a control section that controls processing based on the first DCI on the assumption that the first DCI has been adjusted to be equal in size to second DCI for a second communication service. According to one aspect of the present disclosure, it is possible to suitably perform URLLC communication.

| FIELD | PAYLOAD OF DCI FORMAT 0_0 | PAYLOAD OF DCI FORMAT 0_2 | REMARKS ABOUT PAYLOAD OF DCI FORMAT 0_2 |
|---|---|---|---|
| Identifier | 1 | 1 | To identify the DCI is for DL or UL |
| (Identifier2) | (0) | (1) | To identify the DCI is for eMBB or URLLC |
| Frequency-domain assignment | $\left\lceil log_2\left(N^{BWP}\frac{N^{BWP}+1}{2}\right)\right\rceil$ | $\left\lceil log_2\left(\lceil N^{BWP}/x\rceil\frac{\lceil N^{BWP}/x\rceil+1}{2}\right)\right\rceil$ | x consecutive RBs is a unit of Type1 resource allocation, which is configurable or fixed for each BW and/or for each transmission duration, i.e., TTI |
| Time-domain assignment | 4 | 0 or 1 or 2 or 3 or 4 | Configurable or fixed |
| Freq-hopping flag | 1 | 0 or 1 | Configurable or fixed |
| MCS | 5 | 0 or 1 or 2 or 3 or 4 or 5 | Configurable or fixed |
| NDI | 1 | 1 | |
| RV | 2 | 1 or 2 | Configurable or fixed |
| HPN | 4 | 1 or 2 or 3 or 4 | Configurable or fixed |
| TPC command | 2 | 2 | |
| Repetition factor | 0 | 0 or 1 or 2 | Configurable |
| CSI request | 0 | 0 or 1 | Configurable |
| SRS request | 0 | 0 or 1 | Configurable |
| SRS resource indicator | 0 | 0 or 1 | Configurable |
| Beta offset indicator | 0 | 0 or 1 or 2 | Configurable |
| DMRS related | 0 | 0 or 1 or 2 | Configurable (DMRS pattern, CS/IFDMA indication) |
| Padding bits (if needed) | Alignment b/w 1_0 and 0_0 | Alignment b/w 1_0 and 0_2 | UE can assume size 0_2 ≤ 1_0 before matching |
| SUL/UL indicator | 0 or 1 | 0 or 1 | |

FIG. 1

EP 3 860 208 A1

## Description

Technical Field

The present disclosure relates to a user terminal and a radio communication method in next-generation mobile communication systems.

Background Art

In the universal mobile telecommunications system (UMTS) network, the specifications of long term evolution (LTE) have been drafted for the purpose of further increasing high speed data rates, providing lower delays, and the like (see Non Patent Literature 1). Further, the specifications of LTE Advanced (third generation partnership project (3GPP) Release (Rel.) 10 to 14) have been drafted for the purpose of further increasing the capacity and advancement of LTE (3GPP Rel. 8, 9).

Successor systems of LTE (for example, 5th generation mobile communication system (5G), 5G+ (plus), new radio (NR), or 3GPP Rel. 15 or later releases, and the like) are also under study.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

Future radio communication systems (for example, NR) are expected to involve use cases such as further advancement of mobile broadband (enhanced mobile broadband (eMBB)), machine-type communication that achieves multiple simultaneous connections (massive machine type communications (mMTC)), and ultra-reliable and low-latency communications (URLLC), and the like.

As with eMBB, a study is underway for URLLC on scheduling, triggering reference signals, and the like based on downlink control information (DCI).

However, a study on how to configure the contents or format of DCI for URLLC has little progress. A lack of clear determination of DCI for URLLC prevents URLLC communication from being appropriately performed and may in turn result in a decrease in communication throughput.

It is therefore an object of the present disclosure to provide a user terminal and a radio communication method capable of suitably performing URLLC communication.

Solution to Problem

A user terminal according to one aspect of the present disclosure includes a reception section that receives first downlink control information (DCI) for a first communication service, and a control section that controls processing based on the first DCI on the assumption that the first DCI has been adjusted to be equal in size to second DCI for a second communication service.

Advantageous Effects of Inventions

According to one aspect of the present disclosure, it is possible to suitably perform URLLC communication.

Brief Description of Drawings

Fig. 1 is a diagram showing examples of configurations of DCI formats 0_0 and 0_2.
Fig. 2 is a diagram showing examples of configurations of DCI formats 1_0 and 1_2.
Fig. 3 is a diagram showing an example of a five-bit MCS table for PDSCH.

Fig. 4 is a diagram showing an example of a four-bit MCS table for PDSCH.

Fig. 5 is a diagram illustrating an example of a schematic configuration of a radio communication system according to one embodiment.

Fig. 6 is a diagram illustrating an example of a configuration of a base station according to one embodiment.

Fig. 7 is a diagram illustrating an example of a configuration of a user terminal according to one embodiment.

Fig. 8 is a diagram illustrating an example of a hardware configuration of the base station and the user terminal according to one embodiment.

Description of Embodiments

Future radio communication systems (for example, NR) are expected to involve use cases such as further advancement of mobile broadband (enhanced mobile broadband (eMBB)), machine-type communication that achieves multiple simultaneous connections (massive machine type communications (mMTC)), and ultra-reliable and low-latency communications (URLLC), and the like. For example, it is required that URLLC be larger in latency reduction and higher in reliability than eMBB.

A difference between URLLC requirements and eMBB requirements may be that URLLC is lower in latency than eMBB, or that the URLLC requirements include reliability requirements.

For example, eMBB U-plane latency requirements may include that downlink U-plane latency is 4 ms and uplink U-plane latency is 4 ms. On the other hand, URLLC U-plane latency requirements may include that downlink U-plane latency is 0.5 ms and uplink U-plane latency is 0.5 ms. Further, the URLLC reliability requirements may include that a 32-byte error rate is $10^{-5}$ for a U-plane latency of 1 ms.

It is required that a plurality of UEs (for example, an meMBB UE and a URLLC UE) having different requirements targeted be multiplexed together within a certain carrier (or cell). When one UE supports both eMBB and URLLC, the UE needs to be treated as both an eMBB UE and a URLLC UE at the same time.

As with eMBB, a study is underway for URLLC on scheduling, triggering reference signals, and the like based on downlink control information (DCI).

However, a study on how to configure the contents or format of DCI for URLLC has little progress. A lack of clear determination of DCI for URLLC prevents URLLC communication from being appropriately performed and may in turn result in a decrease in communication throughput.

Therefore, the present inventors have come up with a configuration of the contents or format of DCI for URLLC.

Hereinafter, embodiments according to the present disclosure will be described in detail with reference to the drawings. Radio communication methods according to the embodiments may be applied individually or in combination.

Note that URLLC according to the present disclosure may be read as the first communication service, and eMBB may be read as the second communication service.

(Radio communication method)

<First embodiment>

The first embodiment relates to specific DCI for physical downlink shared channel (PDSCH) reception or physical uplink shared channel (PUSCH) transmission for URLLC.

According to the present disclosure, for simplicity's sake, DCI that schedules PUSCH for URLLC is referred to as DCI format 0_2, UL DCI for URLLC, or the like, and DCI that schedules PDSCH for URLLC is referred to as DCI format 1_2, DL DCI for URLLC, or the like. Note that the present disclosure is not limited to such names.

According to the present disclosure, "DCI for URLLC" may be read as either or both of DCI formats 0_2 and 1_2, DCI format for URLLC, or the like. Further, "either or both of DCI formats X and Y" may be expressed as DCI format X/Y.

The UE may be configured to monitor DCI format 0_2/1_2 in accordance with an RRC information element (for example, "SearchSpace IE"). The UE, if configured as described above, may monitor other DCI formats (for example, DCI format 0_1/1_1 and the like) in addition to DCI format 0_2/1_2.

When monitoring DCI format 0_2/1_2, the UE may monitor DCI format 0_0/1_0 for at least one of system information, paging, random access, or the like.

DCI format 0_2/1_2 may be adjusted to be equal in size to DCI format 0_0/1_0.

DCI format 0_2/1_2 may have fields different from or the same as the fields DCI format 0_0/1_0 has. Each of the fields of DCI format 0_2/1_2 may be different in size from a corresponding one of the fields of DCI format 0_0/1_0.

When DCI format 0_2/1_2 is smaller in size than DCI format 0_0/1_0, DCI format 0_2/1_2 may be padded with given bits (for example, '0') to be equal in size to DCI format 0_0/1_0.

One or more fields may be added to DCI format 0_2/1_2 for flexible control compared to DCI format 0_0/1_0, or one or more fields may be removed or reduced from DCI format 0_2/1_2 to match a payload size.

Even when DCI format 0_2/1_2 is different in field configuration from DCI format 0_0/1_0, DCI format 0_2/1_2 may be padded with padding bits to be equal in total payload size to DCI format 0_0/1_0.

Further, DCI format 0_2/1_2 may be adjusted to be equal in size to DCI format 0_1/1_1. In the above description given of the sizes, fields, and the like of DCI format 0_2/1_2 and DCI format 0_0/1_0, DCI format 0_0/1_0 may be replaced with DCI format 0_1/1_1.

DCI format 0_2/1_2 may be monitored in a specific search space set. For example, DCI format 0_2/1_2 may be monitored in at least one of a UE-specific search space set or a common search space set.

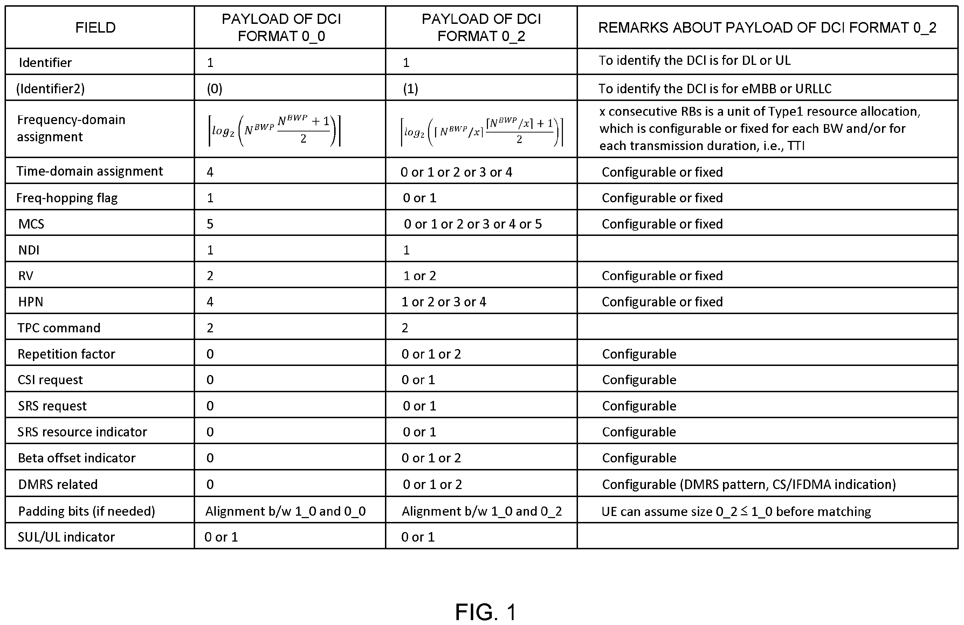

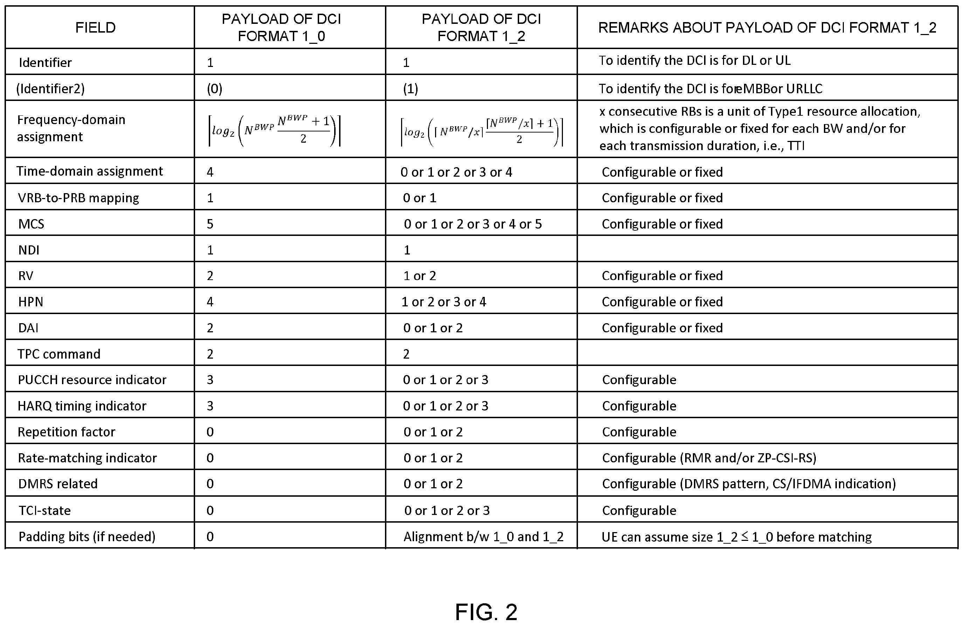

A case where DCI format 0_2/1_2 to be monitored in the UE-specific search space set is adjusted to be equal in size to DCI formats 0_0 and 1_0 will be described with reference to Figs. 1 and 2.

Fig. 1 is a diagram showing examples of the configurations of DCI formats 0_0 and 0_2. The present example shows the number of bits of each field included in the payloads of DCI formats 0_0 and 0_2, and remarks about the payloads of DCI format 0_2. Note that the field names are not limited to the names shown in the drawings.

An Identifier field is a field indicating whether DCI is for DL or UL. The Identifier field may be included in both DCI formats 0_0 and 0_2. The Identifier field may be represented by one bit.

An Identifier 2 field is a field indicating whether DCI is for eMBB or URLLC (or DCI format 0_0 or 0_2). The Identifier 2 field need not be included in either DCI format 0_0 or 0_2, or may be included in at least either DCI format 0_0 or 0_2. The Identifier 2 field may be represented by one bit.

Note that their respective sizes of the Identifier field and the Identifier 2 field are not limited to one bit. Further, a two-bit identifier field obtained by combining the fields may be specified. The use of such an identifier field allows identification of more than two DCI formats.

A Frequency-domain assignment field (may also be referred to as frequency-domain resource allocation field) may be represented, in DCI format 0_0, by the number of bits given by the following expression 1 and be represented, in DCI format 0_2, by the number of bits given by the following expression 2.

[Math. 1]

$$(\text{EXPRESSION 1}) \quad \left\lceil log_2 \left( N^{BWP} \frac{N^{BWP}+1}{2} \right) \right\rceil$$

$$(\text{EXPRESSION 2}) \quad \left\lceil log_2 \left( \lceil N^{BWP}/x \rceil \frac{\lceil N^{BWP}/x \rceil+1}{2} \right) \right\rceil$$

Where $N^{BWP}$ may represent a size of an active UL BWP or DL BWP (a bandwidth, the number of resource blocks), and x may represent one unit of type 1 resource allocation (the number of consecutive resource blocks). Type 1 resource allocation is preferable because URLLC is supposed to use a larger bandwidth. Note that a different resource allocation method may be applied to URLLC.

Note that x may be associated with at least either a BWP or a transmission duration (transmission time interval (TTI), slot, or the like) and configured by higher layer signaling, or specified in the specification. That is, x in the expression 2 may take different values for at least each one of the BWP or the transmission duration.

When fields included in DCI format 0_0 (for example, a Time-domain assignment field of four bits, a Freq-hopping flag field of one bit, a MCS (Modulation and Coding Scheme) field of five bits, an NDI (New Data Indicator) field of one bit, a RV (Redundancy Version) field of two bits, an HPN (HARQ Process Number) field of four bits, a TPC (Transmit Power Control) command field of two bits, and an UL/SUL indicator (Uplink/Supplementary Uplink indicator) field of zero or one bit) are included in DCI format 0_2, the fields may be configurable or may be fixed in accordance with the specification.

When the fields included in DCI format 0_0 are included in DCI format 0_2, it is preferable that the size of each of the fields in DCI format 0_2 be equal to or less than the size of a corresponding one of the fields in DCI format 0_0.

As shown in Fig. 1, in DCI format 0_2, the Time-domain assignment field, the Freq-hopping flag field, the MCS field, the RV field, and the HPN field are configured or specified to be four bits or less, one bit or less, five bits or less, two bits or less, and four bits or less, respectively.

When fields not included in DCI format 0_0 (for example, a Repetition factor field, a CSI (Channel State Information) request field, an SRS (Sounding Reference Signal) request field, an SRS resource indicator field, a Beta offset field, and a DMRS related field (for example, parameters related to DMRS pattern, cyclic shift (CS), application of interleaved frequency division multiple access (IFDMA), and the like) are included in DCI format 0_2, the fields may be configurable or may be fixed in accordance with the specification (Fig. 1 shows that the fields are configurable).

DCI formats 0_0 and 0_2 may include padding bits as needed. The padding bits included in DCI format 0_0 may have the number of bits for making DCI format 1_0 and DCI format 0_0 equal in size to each other.

The padding bits included in DCI format 0_2 may have the number of bits for making DCI format 1_0 (or 0_0) and DCI format 0_2 equal in size to each other. The UE may assume that the payload size of DCI format 0_2 is equal to or less than the payload size of DCI format 1_0, excluding the padding bits.

Fig. 2 is a diagram showing examples of the configurations of DCI formats 1_0 and 1_2. The present example shows the number of bits of each field included in the payloads of DCI formats 1_0 and 1_2 and remarks about the payload of DCI format 1_2. Note that the field names are not limited to the names shown in the drawings.

Note that the fields that appear in Fig. 1 such as the Identifier field, the Identifier 2 field, the MCS field, and the like correspond to contents taken from DCI formats 0_0 and 0_2 described with reference to Fig. 1 and put into DCI formats 1_0 and 1_2; therefore, no description of such fields will be given below.

When fields included in DCI format 1_0 (for example, a VRB-to-PRB mapping field of one bit, a DAI (Downlink Assignment Index) field of two bits, a PUCCH resource indicator field of three bits, and an HARQ timing indicator field of three bits) are included in DCI format 1_2, the fields may be configurable or may be fixed in accordance with the specification.

When the fields included in DCI format 1_0 are included in DCI format 1_2, it is preferable that the size of each of the fields in DCI format 1_0 be equal to or less than the size of a corresponding one of the fields in DCI format 1_2.

When fields not included in DCI format 1_0 (for example, a Rate-matching indicator field (for example, parameters related to rate-matching resource (RMR), zero power (ZP) CSI-RS, and the like), and a TCI-state (Transmission Configuration Indication state) field) are included in DCI format 1_2, the fields may be configurable or may be fixed in accordance with the specification (Fig. 2 shows that the fields are configurable).

DCI format 1_2 may include padding bits as needed. The padding bits included in DCI format 1_2 may have the number of bits for making DCI format 1_0 (or 0_0) and DCI format 1_2 equal in size to each other. The UE may assume that the payload size of DCI format 1_2 is equal to or less than the payload size of DCI format 1_0, excluding the padding bits.

The padding bits in the DCI format 0_2/1_2 may be all '0' or all '1', or may have a specific pattern or the like. The padding bits in DCI format 0_2/1_2 may be scrambled by a given parameter (for example, an UE identifier (UE-ID) or a radio network temporary identifier (RNTI)).

The paddings bits in DCI format 0_2/1_2 may be used as a virtual cyclic redundancy check (V-CRC) bit to reduce false alarm probability. The V-CRC bit corresponds to a known bit value included in the payload to be transmitted, and may be referred to as a bit for pruning or the like. In general, the effect of error correction can be increased as the known bit value increases.

When a certain field of DCI format 0_2/1_2 (for example, RV, HPN, MCS, or the like) is reduced in size compared to a corresponding field of DCI format 0_0/1_0, a value of the field of DCI format 0_2/1_2 may be determined (or interpreted) based on any one or combination of the followings:

> (1) with a correspondence (table) between the value of the field and a corresponding parameter specified for each size of the field, switching a table to be referenced in accordance with the size of a received field;
> (2) assuming that the most significant bit (MSB) or least significant bit (LSB) before the reduction has a specific bit value (for example, '0' or '1'); and
> (3) using a table in which the correspondence (table) between the value of the field and the corresponding parameter has been modified.

Note that, for the above-described (2), the specific bit value may be used as the V-CRC bit.

For example, when the MCS field is reduced, the above-described (1) may mean that the MCS table is defined for each MCS field size. For example, a first MCS table with 32 entries corresponding to an MCS field size of five bits, a second MCS table with 16 entries corresponding to an MCS field size of four bits, a third MCS table with eight entries corresponding to an MCS field size of three bits, and the like may be defined.

Further, as for the above-described (2), when the MCS field is reduced, the UE may interpret, when DCI format 0_2/1_2 has the MCS field size of four bits, the most significant bit as '0' and reference an MCS index having a range of from 0 to 15 corresponding to the value of the MCS field in the five-bit MCS table.

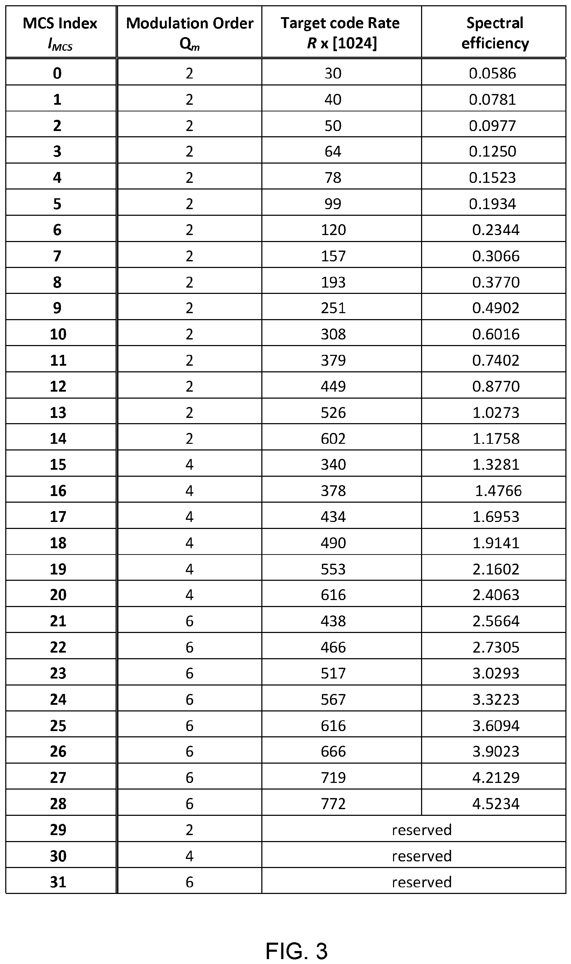

Fig. 3 is a diagram showing an example of the five-bit MCS table for PDSCH. In the table, an MCS index $I_{MCS}$ is associated with a modulation order $Q_m$, a code rate (target code rate), and spectral efficiency. Note that the values in the MCS table shown according to the present disclosure are merely examples and are not limited thereto. Further, some of the items associated with the MCS Index (for example, the spectral efficiency) may be removed, or a different item may be added.

The MCS table shown in Fig. 3 may be an MCS table for URLLC that is distinguished from an MCS table for eMBB, and may be referred to as an MCS table 3 or the like.

In the MCS table shown in Fig. 3, the MCS index in a range of from 29 to 31 may correspond to non-adaptive retransmission. The non-adaptive retransmission may be retransmission using the same transmission parameter as the transmission parameter used for the initial transmission. The transmission parameter may include, for example, at least one of, for example, a modulation scheme, a code rate, subcarrier spacing, a radio resource, or the like.

Note that the MCS index corresponding to the non-adaptive retransmission is not limited to 29 to 31, and may be, for example, 28 to 31.

As for the above-described (3), when the MCS field is reduced, the UE may shift, when DCI format 0_2/1_2 has the MCS field size of four bits, an entry corresponding to the non-adaptive retransmission in the five-bit MCS table, to an entry corresponding to the MCS index ranging from the highest available value in a range of four bits.

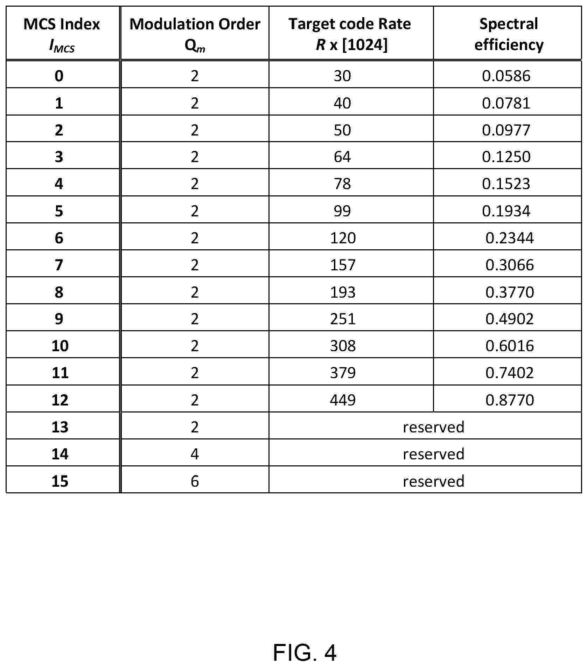

Fig. 4 is a diagram showing an example of the four-bit MCS table for PDSCH. The MCS table shown in Fig. 4 corresponds to a table where entries corresponding to the MCS indices in a range of from 13 to 15 are replaced with entries corresponding to the MCS indices in a range of from 29 to 31 of the MCS table shown in Fig. 3.

The UE may be configured, by higher layer signaling, to make a determination about a specific field of DCI format 0_2/1_2 based on any one or combination of the above-described (1) to (3).

According to the first embodiment described above, the UE can appropriately monitor DCI for URLLC and can suitably control transmission/reception processing based on the DCI.

<Second embodiment>

The second embodiment relates to how to distinguish between the contents or formats of DCI for eMBB and DCI for URLLC. The second embodiment may be applied together with the DCI format configuration (size adjustment, and the like) described according to the first embodiment.

DCI (or DCI format) for eMBB and DCI (or DCI format) for URLLC may be distinguished based on any one or combination of the followings (A) to (D):

(A) search space configuration, control resource set (CORESET) configuration, or physical downlink control channel (PDCCH) monitoring occasion (PDCCH monitoring occasion);
(B) aggregation level corresponding to DCI;
(C) RNTI by which the CRC included in DCI is scrambled; and
(D) specific field in DCI.

As for the above-described (B), the UE may determine that DCI is for eMBB when the aggregation level corresponds to the first set of values (for example, 1, 2 or 4) in a certain CORESET/search space set and that DCI is for URLLC when the aggregation level corresponds to the second set of values (for example, 8 or 16).

As for the above-described (C), the UE may determine that DCI is for URLLC when the CRC of the DCI is scrambled by RNTI for URLLC, otherwise, may determine that the DCI is for eMBB.

As for the above-described (D), for example, the Identifier 2 field described with reference to Figs. 1 and 2 may be used.

The UE may determine that, based on the above-described (A) to (C), when, for example, the PDCCH monitoring occasion is at a specific position in a slot, DCI received during the occasion is for URLLC. Further, the UE may use, when the PDCCH monitoring occasion is at the beginning of the slot, the above-described (B) or (C) to determine whether DCI is for URLLC.

Further, the UE may determine, for the first search space set (for example, the UE-specific search space set), DCI based on the above-described (C), and determine, for the second search space set (for example, the common search space set), DCI based on the above-described (B).

According to the second embodiment described above, the UE can appropriately distinguish between DCI for eMBB and DCI for URLLC.

<Others>

According to the first embodiment described above, it is assumed that the adjustment is made to make DCI format 0_2 and DCI format 1_2 equal in size to each other, but the present disclosure is not limited to the first embodiment. DCI format 0_2 and DCI format 1_2 may be different in size from each other.

For example, DCI format 0_2 may be adjusted to be equal in size to DCI formats 0_0 and 1_0, and DCI format 1_2 may be adjusted to be equal in size to DCI formats 0_1 and 1_1. Conversely, DCI format 1_2 may be adjusted to be equal in size to DCI formats 0_0 and 1_0, and DCI format 0_2 may be adjusted to be equal in size to DCI formats 0_1 and 1_1.

Further, according to the second embodiment, DCI for eMBB and DCI for URLLC may be equal in size to or different in size from each other.

(Radio communication system)

Now, a configuration of a radio communication system according to one embodiment of the present disclosure will be described below. In this radio communication system, communication is performed using one or a combination of the radio communication methods according to the embodiment of the present disclosure.

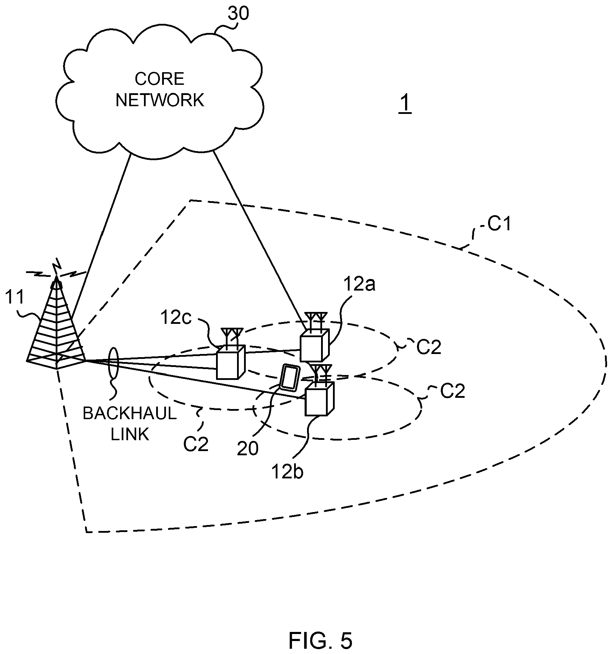

Fig. 5 is a diagram illustrating an example of a schematic configuration of the radio communication system according to one embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are placed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation or dual connectivity (DC) using a plurality of component carriers (CC).

Each CC may be included in at least one of a frequency range 1 (FR1) or a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and for example, FR1 may be a frequency range higher than FR2.

The user terminal 20 may perform communication in each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

Each base station 10 may be connected to a core network 30 via another base station 10 or directly. The core network 30 may include, for example, at least one of evolved packet core (EPC), 5G core network (5GCN), next generation core (NGC), or the like.

The user terminal 20 may support at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), or the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminals 20, a physical broadcast channel (PBCH), a physical downlink control channel (PDCCH), or the like may be used.

In the radio communication system 1, as an uplink channel, a physical uplink shared channel (PUSCH) shared by the user terminals 20, a physical uplink control channel (PUCCH), a physical random access channel (PRACH), or the like may be used.

User data, higher layer control information, a system information block (SIB), and the like are transmitted by PDSCH. User data, higher layer control information, and the like may be transmitted by PUSCH. Further, a master information block (MIB) may be transmitted by PBCH.

Lower layer control information may be transmitted by PDCCH. The lower layer control information may include, for example, downlink control information (DCI) including scheduling information of at least one of PDSCH or PUSCH.

Note that DCI that schedules PDSCH may be referred to as DL assignment, DL DCI, or the like, and DCI that schedules PUSCH may be referred to as UL grant, UL DCI, or the like. Note that PDSCH may be read as DL data, and PUSCH may be read as UL data.

A control resource set (CORESET) and a search space may be used to detect PDCCH. CORESET corresponds to resources where DCI is searched for. The search space corresponds to a search area and a search method for PDCCH candidates. One CORESET may be associated with one or more search spaces. The UE may monitor CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of PUCCH, channel state information (CSI), delivery acknowledgement information (for example, hybrid automatic repeat request acknowledgement (HARQ-ACK), which may be referred to as ACK/NACK or the like), scheduling request (SR), and the like may be transmitted. By means of PRACH, a random access preamble for establishing a connection with a cell may be transmitted.

Note that in the present disclosure, downlink, uplink, and the like may be expressed without "link". Each channel may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) or a secondary synchronization signal (SSS). A signal block including SS (PSS or SSS) and PBCH (and DMRS for PBCH) may be referred to as an SS/PBCH block, SS block (SSB), or the like. Note that SS, SSB, or the like may also be referred to as a reference signal.

In the radio communication system 1, a sounding reference signal (SRS), a demodulation reference signal (DMRS), and the like may be transmitted as an uplink reference signal (UL-RS). Note that DMRS may be referred to as a UE-specific reference signal.

(Base station)

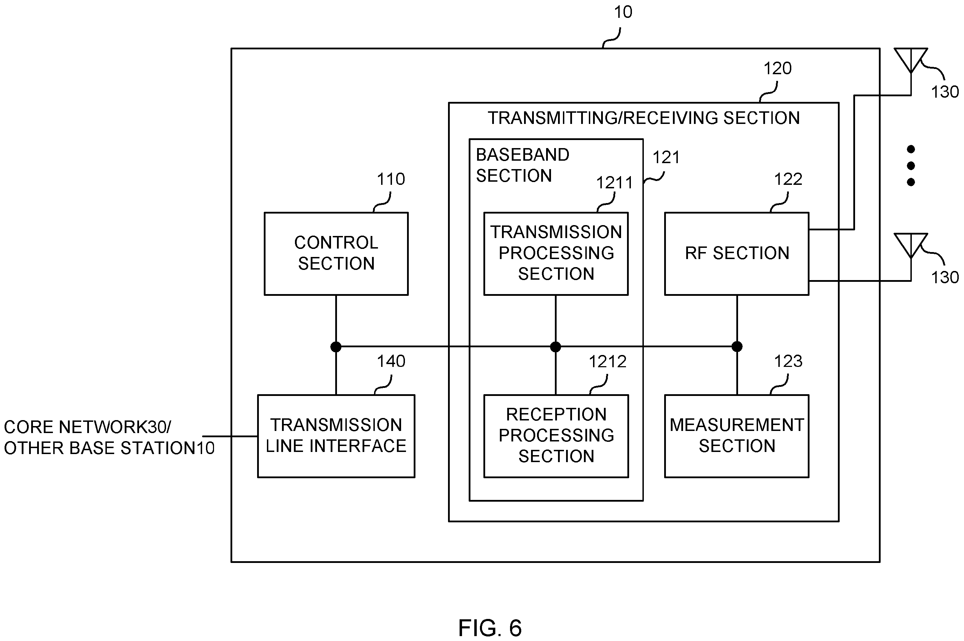

Fig. 6 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example will primarily show functional blocks that pertain to characteristic parts of the present embodiment, it may be assumed that the base station 10 also has other functional blocks necessary for radio communication. A part of processing of each section described below may be omitted.

The control section 110 controls the entire base station 10. The control section 110 can be constituted by a controller, a control circuit, or the like described based on general understanding in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data, control information, a sequence, and the like to be transmitted as a signal, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like described based on general understanding in the technical field to which the present disclosure relates.

The transmitting/receiving section 120 may be constituted as an integrated transmitting/receiving section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna such as an array antenna described based on general understanding in the technical field to which the present disclosure relates.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ re-transmission control), and the like, for example, on data or control information acquired from the control section 110 to generate a bit string to be transmitted.

The transmitting/receiving section 120 (transmission processing section 1211) may perform transmission processing such as channel coding (which may include error correction coding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure the received power (for example, reference signal received power (RSRP)), the received quality (for example, reference signal received quality (RSRQ)), the signal to interference plus noise ratio (SINR), the signal to noise ratio (SNR), the signal strength (for example, received signal strength indicator (RSSI)), the transmission path information (for example, CSI), and the like. The measurement result may be output to the control section 110.

The transmission line interface 140 may transmit/receive a signal (backhaul signaling) to and from an apparatus included in the core network 30, the other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmission/reception antenna 130, or the transmission line interface 140.

Note that the transmitting/receiving section 120 may transmit, to the user terminal 20, at least either first DCI (for example, DCI format 0_2/1_2) for the first communication service (for example, URLLC) or second DCI (for example, DCI format 0_0/1_0 or DCI format 0_1/1_1) for the second communication service (for example, eMBB).

The control section 110 may adjust the first DCI to make the first DCI equal in size to the second DCI.

(User terminal)

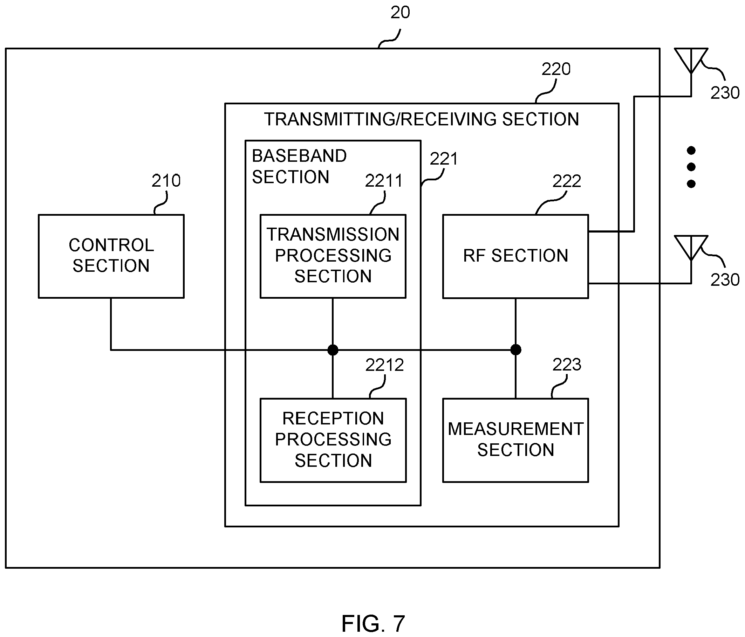

Fig. 7 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example will primarily show functional blocks that pertain to characteristic parts of the present embodiment, it may be assumed that the user terminal 20 also has other functional blocks necessary for radio communication. A part of processing of each section described below may be omitted.

The control section 210 controls the entire user terminal 20. The control section 210 can be constituted by a controller, a control circuit, or the like described based on general understanding in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as a signal, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, and the like described based on general understanding in the technical field to which the present disclosure relates.

The transmitting/receiving section 220 may be constituted as an integrated transmitting/receiving section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna such as an array antenna described based on general understanding in the technical field to which the present disclosure relates.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ re-transmission control), and the like, for example, on data or control information acquired from the control section 210 to generate a bit string to be transmitted.

The transmitting/receiving section 220 (transmission processing section 2211) may perform transmission processing such as channel coding (which may include error correction coding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like based on the received signal. The measurement section 223 may measure the received power (for example, RSRP), the received quality (for example, RSRQ, SINR, or SNR), the signal strength (for example, RSSI), transmission path information (for example, CSI), and the like. The measurement result may be output to the control section 210.

Note that the transmission section and the reception section of the user terminal 20 in the present disclosure may be constituted by at least one of the transmitting/receiving section 220, the transmission/reception antenna 230, or the transmission line interface 240.

Note that the transmitting/receiving section 220 may receive at least either the first DCI (for example, DCI format 0_2/1_2) for the first communication service (for example, URLLC) or the second DCI (for example, DCI format 0_0/1_0 or DCI format 0_1/1_1) for the second communication service (for example, eMBB).

The control section 210 may control processing (for example, PDSCH reception, PUSCH transmission, or the like) based on the first DCI on the assumption that the first DCI has been adjusted (for example, padded) to be equal in size to the second DCI.

When a field included in the second DCI is included in the first DCI, the control section 210 may assume that the size of the field of the first DCI is equal to or less than the size of the field of the second DCI.

When the size of a given field (for example, the MCS field) of the first DCI is reduced compared to the size of a corresponding field of the second DCI, the control section 210 may switch, with a table (for example, the MCS table) representing a parameter corresponding to the value of the field specified for each size of the field, a table to be referenced in accordance with the size of the given field included in the first DCI received.

When the size of a given field of the first DCI is reduced compared to the size of a corresponding field of the second DCI, the control section 210 may assume that the most significant bit or least significant bit of the value of the given field has a specific bit value (for example, '0').

When the size of a given field of the first DCI is reduced compared to the size of a corresponding field of the second DCI, the control section 210 may reference a table where a specific entry (for example, corresponding to the non-adaptive retransmission) included in a table used for the second DCI representing a parameter corresponding to the value of the field has been shifted to an entry corresponding to an available value for the size of the given field of the first DCI.

(Hardware configuration)

Note that the block diagrams that have been used to describe the above embodiment illustrate blocks in functional units. These functional blocks (components) may be implemented by any combination of at least either hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these plural apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that makes a transmission function may be referred to as a transmitting unit or a transmitter. In any case, as described above, the implementation method is not particularly limited.

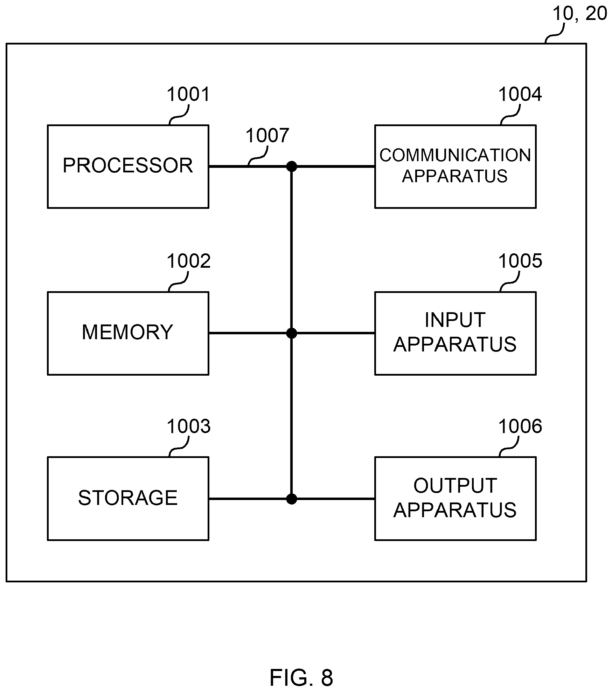

For example, the base station, the user terminal, and the like according to one embodiment of the present disclosure may function as a computer that executes the processing of the radio communication method of the present disclosure. Fig. 8 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed simultaneously, sequentially, or in a different manner, by two or more processors. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least either the storage 1003 or the communication apparatus 1004 into the memory 1002, and executes various processing according to these. As for the programs, programs to allow computers to execute at least part of the operations of the above-described embodiment may be used. For example, the control section 110 (210) may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a random access memory (RAM), or other appropriate storage media. The memory 1002 may be referred to as a "register", a "cache", a "main memory (primary storage apparatus)", or the like. The memory 1002 can store a program (program code), a software module, and the like executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) or the like), a digital versatile disc, or a Blu-ray (registered trademark) disc), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", or the like. The communication apparatus 1004 may be configured to include a high frequency switch, a duplexer, a filter, a frequency synthesizer and the like in order to implement, for example, at least one of frequency division duplex (FDD) or time division duplex (TDD). For example, the above-described transmitting/receiving section 120 (220), transmission/reception antenna 130 (230), and the like may be implemented by the communication apparatus 1004. The transmitting/receiving section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor, or the like). The output apparatus 1006 is an output device for allowing sending output to the outside (for example, a display, a speaker, a light emitting diode (LED) lamp, or the like). Note that the input apparatus 1005 and the output apparatus 1006 may be provided in an integrated structure (for example, a touchscreen).

Furthermore, these apparatuses, including the processor 1001, the memory 1002, and the like are connected by the bus 1007 for communicating information. The bus 1007 may include a single bus, or may include different buses for each pair of apparatuses.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), or the like, and part or all of the functional blocks may be implemented by the hardware. For example, the processor 1001 may be implemented with at least one of these pieces of hardware.

(Modification)

Note that the terms described in the present disclosure and the terms necessary for understanding the present disclosure may be replaced with other terms that convey the same or similar meanings. For example, a channel, a symbol, and a signal (or signaling) may be replaced with each other. Also, the signal may be a message. A reference signal can be abbreviated as an "RS", and may be referred to as a "pilot", a "pilot signal" or the like, depending on which standard applies. Furthermore, a "component carrier (CC)" may be referred to as a "cell", a "frequency carrier", a "carrier frequency", or the like.

A radio frame may include one or more periods (frames) in the time domain. Each of the one or more periods (frames) included in the radio frame may be referred to as a "subframe". Furthermore, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and the like.

A slot may include one or more symbols in the time domain (orthogonal frequency division multiplexing (OFDM) symbols, single carrier frequency division multiple access (SC-FDMA) symbols, and the like). Further, the slot may be a time unit based on numerology.

The slot may include a plurality of mini slots. Each mini slot may include one or more symbols in the time domain. Further, the mini slot may be referred to as a "subslot". The mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as "PDSCH (PUSCH) mapping type B".

The radio frame, the subframe, the slot, the mini slot, and the symbol each represent a time unit in signal communication. The radio frame, the subframe, the slot, the mini slot, and the symbol may be each called by other applicable names. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot", or the like, instead of a "subframe".

Here, the TTI refers to, for example, the minimum time unit of scheduling in radio communication. For example, in the LTE systems, a base station schedules radio resources (for example, frequency bandwidth and transmission power that can be used in each user terminal) to allocate the radio resources to each user terminal on a TTI basis. Note that definition of the TTI is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that the long TTI (for example, the usual TTI, the subframe, or the like) may be replaced with a TTI having a time duration exceeding 1 ms, and the short TTI (for example, the shortened TTI) may be replaced with a TTI having a TTI duration less than the TTI duration of the long TTI and not less than 1 ms.

A resource block (RB) is a resource allocation unit of the time domain and frequency domain, and may include one or a plurality of consecutive subcarriers in the frequency domain. The number of subcarriers included in the RB may be the same regardless of numerology, and may be 12, for example. The number of subcarriers included in the RB may be determined based on numerology.

Also, the RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB (Physical RB)), a subcarrier group (SCG), a resource element group (REG), a PRB pair, an RB pair, or the like.

Furthermore, the resource block may include one or more resource elements (REs). For example, one RE may be a radio resource region of one subcarrier and one symbol.

The bandwidth part (BWP) (which may be referred to as partial bandwidth or the like) may represent a subset of consecutive common RB (common resource blocks) for a certain numerology in a certain carrier. Here, the common RB may be specified by an RB index based on a common reference point of the carrier. A PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be read as "BWP".

Note that the structures of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be various changed.

Furthermore, the information and parameters described in the present disclosure may be represented in absolute values, represented in relative values with respect to given values, or represented using other corresponding information. For example, a radio resource may be specified by a given index.

Names used for, for example, parameters in the present disclosure are in no respect limitative. Furthermore, any mathematical expression or the like that uses these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and the like that have been input and/or output may be stored in a specific location (for example, in a memory), or may be managed in a control table. The information, signals, and the like to be input and/or output can be overwritten, updated, or appended. The information, signals, and the like that are output may be deleted. The information, signals, and the like that are input may be transmitted to other apparatuses.

The reporting of information is by no means limited to the aspects/embodiments described in the present disclosure, and may be performed using other methods. For example, the reporting of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)", "L1 control information (L1 control signal)" and the like. Further, the RRC signaling may be referred to as an "RRC message", and may be, for example, an RRC connection setup message, an RRC connection reconfiguration message, or the like. Further, MAC signaling may also be reported using, for example, MAC control elements (MAC CEs).

Also, reporting of given information (for example, reporting of information to the effect that "X holds") does not necessarily have to be sent explicitly, and can be sent implicitly (for example, by not reporting this piece of information, by reporting another piece of information, and the like).

Determinations may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions, and the like.

Also, software, instructions, information, and the like may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be referred to by a term such as a macro cell, a small cell, a femto cell, or a pico cell.

The base station can accommodate one or more (for example, three) cells. When the base station accommodates a plurality of cells, the entire coverage area of the base station can be partitioned into a plurality of smaller areas, and each smaller area can provide the communication service through the base station subsystem (for example, indoor small base station (remote radio head (RRH))). The term "cell" or "sector" refers to a part or all of the coverage area of at least one of a base station and/or a base station subsystem that performs communication service in this coverage.

In the present disclosure, the terms "mobile station (MS)", "user terminal", "user equipment (UE)", "terminal" and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus and the like. Note that at least one of the base station or the mobile station may be a device mounted on a mobile unit, a mobile unit itself, or the like. The movable object may be a vehicle (for example, automobile and airplane), an unmanned movable object (for example, drone and autonomous vehicle), or a robot (manned or unmanned). Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration acquired by replacing communication between a base station and a user terminal with communication among a plurality of user terminal (for example, may be referred to as Device-to-Device (D2D), Vehicle-to-Everything (V2X), or the like) or the like. In the case, a configuration in which the user terminal 20 has the function of the above-described base station 10 may be adopted. In addition, terms such as "uplink" and "downlink" may be interpreted as a term corresponding to communication between terminals (for example, "side"). For example, an uplink channel and a downlink channel may be replaced with a side channel.

Likewise, the user terminal in the present disclosure may be replaced with the base station. In this case, the base station 10 may be configured to have the functions of the user terminal 20 described above.

The operations that have been described in the present disclosure to be performed by the base station may be performed by its upper node, in some cases. In a network including one or more network nodes with base stations, it is obvious that various operations performed to communicate with terminals can be performed by base stations, one or more network nodes (for example, mobility management entities (MMEs), serving-gateways (S-GWs), and the like may be possible, but these are not limiting) other than base stations, or combinations of these.

The aspects/embodiments illustrated in the present disclosure may be used individually or in combinations, which may be switched depending on the mode of implementation. Further, the order of processes, sequences, flowcharts and so on that have been used to describe the aspects/embodiments herein may be re-ordered as long as inconsistencies do not arise. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determining" as used herein may be interpreted to mean making determination related to resolving, selecting, choosing, establishing, comparing, and the like. In other words, "determining" as used herein may be interpreted to mean making determination related to some operations.

In addition, "determining" as used herein may be read as "assuming", "expecting", "considering", or the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are respectively different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with various correction and in various modification aspects, without departing from the spirit and scope of the invention defined by the recitations of claims. Consequently, the description of the present disclosure is provided for the purpose of exemplification and explanation, and has no limitative meaning to the invention according to the present disclosure.

**Claims**

1. A user terminal comprising:

   a reception section that receives first downlink control information (DCI) for a first communication service; and
   a control section that controls processing based on the first DCI on an assumption that the first DCI has been adjusted to be equal in size to second DCI for a second communication service.

2. The user terminal according to claim 1, wherein when a field included in the second DCI is included in the first DCI, the control section assumes that a size of the field of the first DCI is equal to or less than a size of the field of the second DCI.

3. The user terminal according to claim 1 or 2, wherein when a size of a given field of the first DCI is reduced compared to a size of a corresponding field of the second DCI, the control section switch, with a table representing a parameter corresponding to a value of the field specified for each size of the field, a table to be referenced in accordance with the size of the given field included in the first DCI received.

4. The user terminal according to any one of claims 1 to 3, wherein when a size of a given field of the first DCI is reduced compared to a size of a corresponding field of the second DCI, the control section assumes that a most significant bit or least significant bit of a value of the given field has a specific bit value.

5. The user terminal according to any one of claims 1 to 4, wherein when a size of a given field of the first DCI is reduced compared to a size of a corresponding field of the second DCI, the control section references a table where a specific entry included in a table that is used for the second DCI and represents a parameter corresponding to a value of the field has been shifted to an entry corresponding to an available value for the size of the given field of the first DCI.

6. A radio communication method for a user terminal, comprising the steps of:

   receiving first downlink control information (DCI) for a first communication service; and
   controlling processing based on the first DCI on an assumption that the first DCI has been adjusted to be equal in size to second DCI for a second communication service.

| FIELD | PAYLOAD OF DCI FORMAT 0_0 | PAYLOAD OF DCI FORMAT 0_2 | REMARKS ABOUT PAYLOAD OF DCI FORMAT 0_2 |
|---|---|---|---|
| Identifier | 1 | 1 | To identify the DCI is for DL or UL |
| (Identifier2) | (0) | (1) | To identify the DCI is for eMBB or URLLC |
| Frequency-domain assignment | $\left\lceil log_2 \left( N^{BWP} \frac{N^{BWP}+1}{2} \right) \right\rceil$ | $\left\lceil log_2 \left( \lceil N^{BWP}/x \rceil \frac{\lceil N^{BWP}/x \rceil + 1}{2} \right) \right\rceil$ | x consecutive RBs is a unit of Type1 resource allocation, which is configurable or fixed for each BW and/or for each transmission duration, i.e., TTI |
| Time-domain assignment | 4 | 0 or 1 or 2 or 3 or 4 | Configurable or fixed |
| Freq-hopping flag | 1 | 0 or 1 | Configurable or fixed |
| MCS | 5 | 0 or 1 or 2 or 3 or 4 or 5 | Configurable or fixed |
| NDI | 1 | 1 | |
| RV | 2 | 1 or 2 | Configurable or fixed |
| HPN | 4 | 1 or 2 or 3 or 4 | Configurable or fixed |
| TPC command | 2 | 2 | |
| Repetition factor | 0 | 0 or 1 or 2 | Configurable |
| CSI request | 0 | 0 or 1 | Configurable |
| SRS request | 0 | 0 or 1 | Configurable |
| SRS resource indicator | 0 | 0 or 1 | Configurable |
| Beta offset indicator | 0 | 0 or 1 or 2 | Configurable |
| DMRS related | 0 | 0 or 1 or 2 | Configurable (DMRS pattern, CS/IFDMA indication) |
| Padding bits (if needed) | Alignment b/w 1_0 and 0_0 | Alignment b/w 1_0 and 0_2 | UE can assume size 0_2 ≤ 1_0 before matching |
| SUL/UL indicator | 0 or 1 | 0 or 1 | |

FIG. 1

EP 3 860 208 A1

| FIELD | PAYLOAD OF DCI FORMAT 1_0 | PAYLOAD OF DCI FORMAT 1_2 | REMARKS ABOUT PAYLOAD OF DCI FORMAT 1_2 |
|---|---|---|---|
| Identifier | 1 | 1 | To identify the DCI is for DL or UL |
| (Identifier2) | (0) | (1) | To identify the DCI is for eMBB or URLLC |
| Frequency-domain assignment | $\left\lceil log_2 \left( N^{BWP} \frac{N^{BWP}+1}{2} \right) \right\rceil$ | $\left\lceil log_2 \left( \lceil N^{BWP}/x \rceil \frac{\lceil N^{BWP}/x \rceil + 1}{2} \right) \right\rceil$ | x consecutive RBs is a unit of Type1 resource allocation, which is configurable or fixed for each BW and/or for each transmission duration, i.e., TTI |
| Time-domain assignment | 4 | 0 or 1 or 2 or 3 or 4 | Configurable or fixed |
| VRB-to-PRB mapping | 1 | 0 or 1 | Configurable or fixed |
| MCS | 5 | 0 or 1 or 2 or 3 or 4 or 5 | Configurable or fixed |
| NDI | 1 | 1 | |
| RV | 2 | 1 or 2 | Configurable or fixed |
| HPN | 4 | 1 or 2 or 3 or 4 | Configurable or fixed |
| DAI | 2 | 0 or 1 or 2 | Configurable or fixed |
| TPC command | 2 | 2 | |
| PUCCH resource indicator | 3 | 0 or 1 or 2 or 3 | Configurable |
| HARQ timing indicator | 3 | 0 or 1 or 2 or 3 | Configurable |
| Repetition factor | 0 | 0 or 1 or 2 | Configurable |
| Rate-matching indicator | 0 | 0 or 1 or 2 | Configurable (RMR and/or ZP-CSI-RS) |
| DMRS related | 0 | 0 or 1 or 2 | Configurable (DMRS pattern, CS/IFDMA indication) |
| TCI-state | 0 | 0 or 1 or 2 or 3 | Configurable |
| Padding bits (if needed) | 0 | Alignment b/w 1_0 and 1_2 | UE can assume size 1_2 $\leq$ 1_0 before matching |

FIG. 2

EP 3 860 208 A1

| MCS Index $I_{MCS}$ | Modulation Order $Q_m$ | Target code Rate $R$ x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

FIG. 3

| MCS Index $I_{MCS}$ | Modulation Order $Q_m$ | Target code Rate $R$ x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | reserved | |
| 14 | 4 | reserved | |
| 15 | 6 | reserved | |

FIG. 4

FIG. 5

FIG. 6

EP 3 860 208 A1

FIG. 7

EP 3 860 208 A1

FIG. 8

## INTERNATIONAL SEARCH REPORT

| International application No. |
| --- |
| PCT/JP2018/036480 |

A. CLASSIFICATION OF SUBJECT MATTER
Int.Cl. H04W28/06(2009.01)i

According to International Patent Classification (IPC) or to both national classification and IPC

B. FIELDS SEARCHED

Minimum documentation searched (classification system followed by classification symbols)
Int.Cl. H04W4/00-99/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | ETRI, Discussion on PDCCH enhancements for URLLC [online], 3GPP TSG RAN WG1 Meeting #94 R1-1808815, 24 August 2018, section 2, Internet <URL: http://www.3gpp.org/ftp/tsg_ran/WG1_RL1/TSGR1_94/Docs/R1-1808815.zip> | 1-4, 6<br>5 |
| A | SAMSUNG, Layer1 enhancement for URLLC [online], 3GPP TSG RAN WG1 #94 R1-1808787, 24 August 2018, sections 2.1, 2.2, Internet <URL: http://www.3gpp.org/ftp/tsg_ran/WG1_RL1/TSGR1_94/Docs/R1-1808787.zip> | 1-6 |

☒ Further documents are listed in the continuation of Box C.      ☐ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 06.12.2018 | 18.12.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

| International application No. |
| --- |
| PCT/JP2018/036480 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | CATT, Necessity of a compact DCI format for NR URLLC [online], 3GPP TSG RAN WG1 #92 R1-1801749, 02 March 2018, section 2.2, Internet <URL: http://www.3gpp.org/ftp/tsg_ran/WG1_RL1/TSGR1_92/Docs/R1-1801749.zip> | 1-6 |

Form PCT/ISA/210 (continuation of second sheet) (January 2015)

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010